# EUROPEAN PATENT APPLICATION

(11) **EP 1 668 990 A1**
(43) Date of publication of application: **14.06.2006**
(21) Application number: 04030250.7
(22) Date of filing: 21.12.2004
(51) Int. Cl.: A23C 19/086, A23C 19/09

(54) **A process for the preparation of dried grated cheese with added flavouring, a process for the preparation of a mixture of dried cheeses with added flavouring and the end products thus obtained**

(30) Priority: 10.12.2004 IT pr20040086
(71) Applicant: Fallini Formaggi S.r.l., 42043 Gattatico RE (IT)
(72) Inventor: Fallini, Stefano, 43100 Parma (IT); Fallini, Paolo, 42043 Gattatico (Reggio Emilia) (IT)
(74) Representative: Gotra, Stefano

(57) **Abstract**

A process for the preparation of dried grated cheese with added flavouring, comprising the following steps: selecting the cheese; grating the cheese that has been selected; drying the grated cheese; cooling the dried cheese; packaging the dried cheese. In particular, the process, after the cooling step, comprises the following steps: addition of flavouring substances in a proportion of between 4% and 20% of the mass of dried grated cheese; blending the dried grated cheese with said added flavouring substances. A process for the preparation of a mixture of dried grated cheeses with added flavouring. Dried grated Parmigiano Reggiano cheese with added flavouring. Mixture of dried grated cheeses with added flavouring.

## Description

This invention relates to a process for the preparation of dried grated cheese with added flavouring, a process for the preparation of a mixture of dried grated cheeses with added flavouring and the end products thus obtained.

The food industry is always in search of products capable of attracting consumers by reason of their novel appearance or a new and pleasant taste.

For this reason, with specific reference to the dairy sector, cheeses have been developed that contain, for example, flavouring substances, such as mushrooms, truffles, walnuts, aromatic herbs and spices, which are added fresh or in the form of extracts.

At present, flavouring substances are added to processed cheeses, or soft or hard cheeses.

As far as soft cheeses are concerned, the flavouring substance, or mixture of flavouring substances, are usually added immediately before forming and firming the cheese.

As regards hard cheeses, document WO 92/07472 describes a process for the preparation of a hard cheese with added flavouring, for example Grana Padano or Parmigiano Reggiano, and the end product thus obtained.

More specifically, the process consists of the following steps:
- washing the whole cheese;
- drying the cheese in treated and filtered air;
- crushing the whole cheese;
- grating the cheese to obtain particles with a predefined particle size, or shredding;
- mixing with extracts and/or fresh ingredients to obtain a blended intermediate product;
- pressing and recompacting the blended intermediate product;
- vacuum packaging the end product thus obtained.

In particular, the grating or shredding steps are performed to obtain, respectively, cheese particles with a size that is less than a predetermined value, or cheese flakes of a thickness that is less than a predetermined value.

In the blending step, the extracts and/or fresh ingredients consist of added flavouring substances.

The flavouring substances consist of between 2% and 7% mushroom or truffle extract and between 5% and 20% fresh mushroom or truffle pieces.

The step of pressing and recompacting the blended product comprises a first compaction at a pressure of approximately 5 bar and a second compaction at a pressure of between 8 and 10 bar.

Finally, the pressing and recompacting steps are performed in a vacuum.

None of the processes described briefly above can be used to prepare a dried grated cheese product with added flavouring.

The fresh cheese product with added flavouring, for example the Parmigiano Reggiano-type cheese prepared according to the method described in document WO 92/07472, cannot be transformed into a dried grated cheese with added flavouring in view of the following problems, which have not yet been solved.

Firstly, fresh cheese has a moisture content of between approximately 30% and 35%, while the moisture content of the flavouring substances is between approximately 5% and 8%; drying the cheese in order to obtain a product with a moisture content of between approximately 12% and 15% would burn the flavouring substances .

Even if the cheese is dried at a lower temperature to prevent the flavouring substances from burning, the organoleptic properties of the product dried is this way would be entirely different from those of the original product. In particular, the excessive dehydration of the flavouring substances would have an adverse effect on the taste and smell of the end product.

One particular drawback of products obtained using the processes known in the prior art is that the fresh cheese with added flavouring must be vacuum packed or packed in a controlled atmosphere to ensure correct preservation.

The purpose of this invention is to eliminate the drawbacks described above, with a process for the preparation of dried grated cheese with added flavouring that is capable of obtaining a stable product with no deterioration in terms of taste and smell.

Another purpose of this invention is to provide a process for the preparation of dried grated cheese with added flavouring with a novel taste.

A further purpose of this invention is to develop a process for the preparation of dried grated cheese with added flavouring that can be used in combination with different types of food, to enhance the flavour thereof.

This invention also provides process for the preparation of a mixture of dried grated cheeses with added flavouring.

Another purpose of this invention is to produce a dried grated cheese with added flavouring and a mixture of dried grated cheeses with added flavouring.

A further purpose of this invention is to obtain the results described above by means of a simple, rational and repeatable process.

Said purposes are fully achieved with the process for the preparation of dried grated cheese with added flavouring and the process for the preparation of a mixture of dried grated cheeses with added flavouring, according to this invention, which are characterized by the content of the appended claims.

These and other characteristics will become more readily apparent from the following description of preferred embodiments of the processes, with specific reference to hard cheeses.

The process for the preparation of dried grated cheese with added flavouring, according to this invention, consists of the following steps:
- selecting the cheese;
- grating the cheese that has been selected;
- drying the grated cheese;
- cooling the dried cheese;
- packaging the dried cheese.

In an innovative and original manner, after the cooling step, the process according to this invention includes the following steps:
- addition of flavouring substances in a proportion of between 4% and 20% of the mass of dried grated cheese;
- blending the dried grated cheese with said added flavouring substances .

The step during which the dried grated cheese is blended with the added flavouring substances is preferably performed inside a horizontal mixer with a rotating blade. The duration of the blending step varies as a function of the flavouring substances that are used and lasts for between approximately 10 and 20 minutes.

The duration of the blending step varies as a function of the particle size and composition of the flavouring substances that are used.

According to the preferred embodiment, the grating step is preceded by a step in which the rind of the cheese is scraped to remove any impurities.

Unlike the processes known in the prior art, the whole cheese is not washed and dried, since the drying step is sufficient to guarantee the absence of any contaminating agents in the end product.

According to the preferred embodiment the process comprises a step in which at least one anti-compacting agent is added during the blending phase to facilitate the blending of the grated cheese with the added flavouring substances.

The flavouring substance preferably comprises at least one of the following substances: aromatic herbs, truffle, curry, mushrooms, garlic, onion, chilli.

According to one alternative embodiment, the flavouring substance may comprise a combination of two or more of the substances listed above, i.e. aromatic herbs, truffle, curry, mushrooms, garlic, onion, chilli.

Alternatively, the flavouring substance may comprise a mixture of different ingredients.

In particular, a first mixture preferably comprises garlic, onion, tomato and potatoes.

Alternatively, the flavouring agent may consist of a second type of mixture comprising tomato, aromatic herbs and spices.

The drying step is performed at a temperature of approximately 70°C for between approximately 25 and 40 minutes, to reduce the moisture content of the cheese from approximately 30% - 40% to approximately 10% - 20%, preferably to 15% - 16%, in order to obtain a product that is stable at ambient temperature.

Incidentally, moisture content refers to grams of water per grams of product.

The added flavouring substances used in the process according to this invention preferably have a moisture content of between approximately 3% and 10%.

After the grating step, the cheese particles have a diameter of between 1 and 4 millimeters. This is the correct diameter to ensure the best blending of the grated cheese with the added flavouring substances.

According to the preferred embodiment, the grated and dried cheese is sieved using a vibrating screen. In particular, the product that remains in the sieve is subjected to a new processing cycle.

The product is packed in a normal atmosphere.

Advantageously, the dried grated cheese with added flavouring prepared using the process according to this invention can be stored for several months without having to be packed in a vacuum or in a modified or controlled atmosphere. The low moisture content of the end product prevents the proliferation of the microorganisms that are responsible for any deterioration of the quality of the product.

The process for preparing a mixture of dried grated cheeses with added flavouring comprises the following steps:
- selecting a plurality of cheeses;
- grating the cheeses that have been selected;
- mixing the grated cheeses;
- drying the mixture of grated cheeses;
- cooling the mixture of dried cheeses;
- packaging the mixture of dried cheeses.

In an innovative and original manner, after the cooling step, the process for preparing a mixture of dried grated cheeses with added flavouring according to this invention includes the following steps:
- addition of flavouring substances in a proportion of between 4% and 20% of the mass of dried grated cheeses;
- blending the mixture of dried grated cheeses with said flavouring substances.

The cheese mixture preferably consists of hard cheeses, for example Parmigiano Reggiano and Grana Padano.

The subsequent steps and processes used to prepare the dried grated cheese with added flavouring using a single variety of cheese (described above), also apply for the preparation of a mixture of dried grated cheeses.

In particular, the process for preparing dried grated cheese with added flavouring according to this invention is used to obtain dried grated Parmigiano Reggiano cheese with added flavouring.

More precisely, the Parmigiano Reggiano-type cheese prepared using the process according to this invention comprises at least one added flavouring substance, preferably chosen from among the following substances: aromatic herbs, truffle, curry, mushrooms, garlic, onion, chilli.

The invention achieves some important advantages.

Firstly, the process according to this invention can be used to prepare dried grated cheese with added flavouring that remains stable with no deterioration in terms of taste or smell.

Secondly, the dried grated cheese or dried mixture of grated cheeses with added flavouring, obtained using the process according to this invention, have a novel taste and can be used in combination with different types of food, to enhance the flavour thereof.

Advantageously, the processes according to this invention are easy to implement, rational and repeatable.

Another advantage consists of the fact that the dried grated cheese or dried mixture of grated cheeses with added flavouring, obtained using the process according to this invention, do not require any special methods of storage, such as packaging in a vacuum or controlled atmosphere; the products obtained using this method can be stored in jars in a "normal" atmosphere" for several months.

## Claims

1. A process for the preparation of dried grated cheese with added flavouring, comprising the following steps:
selecting the cheese;
grating the cheese that has been selected;
drying the grated cheese;
cooling the dried cheese;
packaging the dried cheese,
**characterized in that** it comprises, after the cooling step, the following steps:
addition of flavouring substances in a proportion of between 4% and 20% of the mass of dried grated cheese;
blending the dried grated cheese with said added flavouring substances.

2. A process for the preparation of a mixture of dried grated cheeses with added flavouring, comprising the following steps:
selecting a plurality of cheeses;
grating the cheeses that have been selected;
mixing the grated cheeses;
drying the mixture of grated cheeses;
cooling the mixture of dried cheeses;
packaging the mixture of dried cheeses,
**characterized in that** it comprises, after the cooling step, the following steps:
addition of flavouring substances in a proportion of between 4% and 20% of the mass of dried grated cheeses;
blending the mixture of dried grated cheeses with said added flavouring substances.

3. Process according to claim 1 or 2, **characterized in that** said flavouring substance comprises at least one of the following substances: aromatic herbs, truffle, curry, mushrooms, garlic, onion, chilli.

4. Process according to claim 1 or 2, **characterized in that** said added flavouring substance comprises a combination of at least two of the following substances:
aromatic herbs, truffle, curry, mushrooms, garlic, onion, chilli.

5. Process according to claim 1 or 2, **characterized in that** said added flavouring substance comprises a mixture of garlic, onion, tomato and potatoes.

6. Process according to claim 1 or 2, **characterized in that** said added flavouring substance comprises a mixture of tomato, aromatic herbs and spices.

7. Process according to any of the previous claims, **characterized in that** said drying step is performed at a temperature of approximately 70°C for between approximately 25 and 40 minutes.

8. Process according to claim 1, **characterized in that** the grated cheese, before the drying step, has a moisture content of between approximately 30% and 40%.

9. Process according to claim 2, **characterized in that** the mixture of grated cheeses, before drying, has a moisture content of between approximately 30% and 40%.

10. Process according to any of the previous claims, **characterized in that** the added flavouring substance has a moisture content of between approximately 3% and 10%.

11. Process according to claim 1, **characterized in that** the particles of grated cheese have a diameter of between approximately 1 and 4 millimeters.

12. Process according to claim 2, **characterized in that** the particles of the mixture of grated cheeses have a diameter of between approximately 1 and 4 millimeters.

13. Process according to claim 1, **characterized in that** it comprises a step in which the grated cheese is sieved, after said drying step.

14. Process according to claim 2, **characterized in that** it comprises a step in which the mixture of grated cheeses is sieved, after said drying step.

15. Process according to claim 1 or 2, **characterized in that** it comprises a step in which at least one anti-compacting agent is added during said blending step.

16. Grated and dried Parmigiano Reggiano cheese, **characterized in that** it comprises at least one added flavouring substance.

17. Parmigiano Reggiano cheese according to claim 15, **characterized in that** said added flavouring substance is chosen from among the following substances: aromatic herbs truffle, curry, mushrooms, garlic, onion, chilli.

18. Mixture of grated and dried cheeses, **characterized in that** it comprises at least one added flavouring substance.
